Europäisches Patentamt

European Patent Office

Office européen des brevets

(11) Publication number: **0 336 909**
**A2**

# (12) EUROPEAN PATENT APPLICATION

(21) Application number: **89830148.6**

(51) Int. Cl.⁴: **F 16 K 17/00**

(22) Date of filing: **05.04.89**

(30) Priority: **05.04.88 IT 2009788**

(43) Date of publication of application:
**11.10.89 Bulletin 89/41**

(84) Designated Contracting States:
**AT BE CH DE ES FR GB GR LI NL SE**

(71) Applicant: **ITALARMS S.r.l.**
**Via Mario Pagano, 71**
**Milano (IT)**

(72) Inventor: **Adani, Giovanni Battista**
**Via Mario Pagano, 71**
**I-Milano (IT)**

(74) Representative: **Caregaro, Silvio et al**
**c/o Società Italiana Brevetti S.p.A. Via Carducci 8**
**I-20123 Milano (IT)**

(54) A valve for protecting ventilation openings of closed environments from explosion waves.

(57) There is described herein a valve for protecting a ventilating opening of a closed environment in general, against explosion-generated waves.

Therefore, the subject valve is used in the construction of both military and civil shelters, in military vehicles and vessels, in the field of civil and industrial protection, in order to obtain a ready protection in particular for ventilating suction ports connected to the outside, and for protecting air ejection openings from air conditioned environments, and in general all those openings through which air or gas in general is drawn or ejected.

To meet the above objective the inventive valve uses at least a pair of thin plates (10), resiliently deformable under the action of the above waves and adapted to dampen said waves in both cases where they are overpressure waves or vacuum waves, thereby protecting the opening where the valve is mounted.

Fig.1

**Description**

**A VALVE FOR PROTECTING VENTILATION OPENINGS OF CLOSED ENVIRONMENTS FROM EXPLOSION WAVES**

The subject of this invention is a valve intended for use in protecting a ventilation opening in a closed environment in general from explosion-generated waves. The subject valve may be used for both military and civil purposes, in that it is adapted to dampen any explosion generated waves.

By the term closed environment there is meant herein any closed space, either stationary or in motion, provided with ventilation openings.

The conventionally known valves cannot be used for the above purpose, due first of all to their operational inertia causing a reaction time which, regardless how short it is, always exceeds by far the reaction time required of the valve.

Furthermore, the known valves have a number of parts requiring to be set in motion in order to open or to close the valve and in many cases they need to be provided with servomechanisms which further increase the valve complexity and make the valve even less suitable to meet the objectives attainable instead by means of the valve according to this invention.

Therefore, there has been conceived, and it makes the subject of this invention, a valve providing, among the main features thereof, an extremely reduced reaction time, the elimination of moving parts, as well as of possible servomechanisms and, furthermore, a remarkable reliability, durable in time. The features and the advantages of the valve of this invention will become apparent from the following detailed description of a non limiting embodiment thereof, made in reference to the attached drawing wherein:

Figure 1 is a plan view of the valve embodying this invention;

Figure 2 is a partial sectional view of the valve of Figure 1 along section line II-II of said Figure;

Figure 3 is a cross sectional view of the valve shown in Figure 1, along section line III-III of said Figure, in a non operating condition;

Figure 4 is a cross sectional view of the valve of Figure 1, along section line III-III of said Figure, in an operating condition;

Figure 5 is an enlarged scale view of a detail of another embodiment.

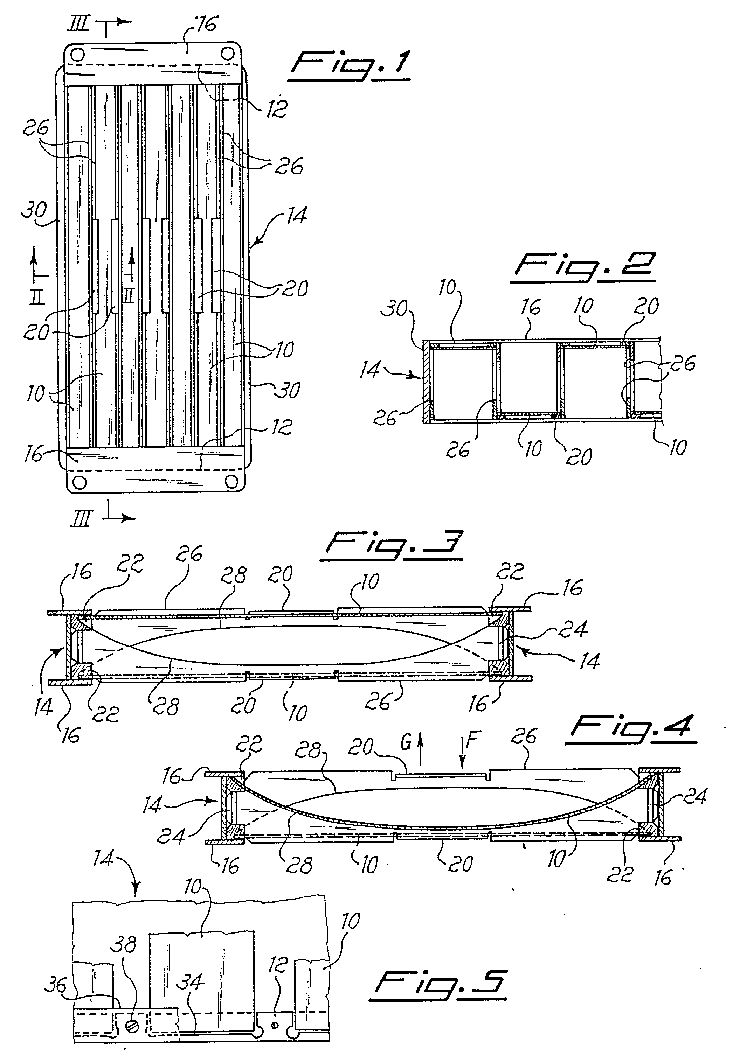

The valve shown in Figure 1 may be considered as a "multiple" valve, in that it comprises a plurality of "modules" each corresponding substantially to a pair of thin plates capable of being resiliently deformed.

Referring to the above Figure, the valve according to this invention includes, in the embodiment considered herein, seven resiliently deformable thin plates, each referenced by number 10, engaged at the ends thereof on two opposite sides 12 of an essentially box-like body 14, substantially parallelepipedal in shape, open on the bases thereof, lying parallel to thin plates 10. The ends of thin plates 10 are held in place by applying flanges 16, as it will be explained in the following.

As it is apparent in particular from Figure 3, the end of each thin plate 10 is received in a suitably shaped seat 22 of a substantially U-shaped body 24, having one of said seats provided in each arm thereof. Thin plates 10 engage, in the central region thereof, against an overlying bent over portion 20 of a divider baffle 26, said portion being provided on a substantially straight side of said baffle. The bent over portions 20 as well as flanges 16 prevent thin plate 10 from coming out of body 14. According to this invention, as it should also be apparent in particular from Figures 1 and 2, divider baffles 26 are integrally fastened to each other in pairs in such a way that there is a pair of baffles 26 between a thin plate and the adjacent one.

As it is shown in particular in Figure 3, side 28 of baffles 26 opposite to the previous one is curved, and baffles 26 of each pair are fastened to each other in such a way that the curved contour 28 of a baffle is perfectly symmetrical relative to curved contour 28 of the second baffle integrally fastened to the former one. Furthermore, contours 28 of a pair of opposed baffles, associated with the same thin plate, have identically arranged profiles 28. Further yet, curved contour 28 blends perfectly into the shape of seats 22 and provides therewith a curved discontinuity-free contour which will enable thin plates 10 to deform under the action of pressure, without incurring into any problem, like for instance folding formation.

In Figure 4 there is shown, for exemplary purposes, the way a thin plate 10 (the one located above), bends due to the action of a pressure wave whose direction is schematically shown by arrow F in the same Figure. The side edges of thin plate 10 come into engagement with the curved contour of corresponding divider baffles 26 opposite to each other, whereby they cut off the pressure wave, in an extremely short time, and they protect the opening where the valve has been applied.

As it is known, an explosion generated wave, or better an explosion generated wave train, has a shape exhibit ing a fast pressure increase, all the way to a maximum, followed by a downward slope all the way down to negative values, which therefore correspond to a vacuum. The valve of this invention is adapted to compensate said vacuum as well, owing in particular to the unique arrangement of divider baffles 26 and of thin plates 10. In fact, assuming that the pressure wave referred to by arrow F in Figure 4, is followed by a vacuum wave in the direction schematically indicated by arrow G in the same Figure, thin plate 10 located above will move to the rest position thereof, shown with solid lines, while, in this case, lower thin plate 10 will deform upwards, still going to engage, at the side edges thereof, with the curved contour of the other divider baffles 26. Concerning the above situation, the valve according to this invention should be considered a two directional valve for all purposes. In this respect, each thin plate 10 will be able to deform only in an opposite direction relative to the adjacent one.

Referring in particular to Figure 2, it should be noted that the two thin plates 10 at the ends, i.e. the ones located at the side walls 30 of box-like body 14, are associated with a divider baffle 26 fastened to side wall 30 of box-like body 14. In particular, all the baffles 26, possibly the side ones as well, are fastened to body 14 for instance by welding bodies 24 to the internal walls of said body.

In Figure 5 there is shown another embodiment, provided to retain the ends of thin plates 10 within box-like body 14. According to this embodiment, on sides 12 of box-like body 14 there is provided a plurality of milling cuts 34 adapted to receive the ends of thin plates 10 which are in turn retained by means of sections 36, fastened to sides 12 of box-like body 14 for instance by means of screws 38.

As it should be understood, the cross sectional shape of milling cuts 34 will be identical to that of seats 22, in order to allow a trouble-free deformation of thin plates 10.

As it has been mentioned above, the valve described herein is a modular type. Broadly speaking, said modularity should extend to the possibility to assemble, in series or in parallel, any number of valves like the one described above.

It should finally be understood that variations and/or modifications can be made to the valve according to this invention, without exceeding the protection scope of the same invention.

## Claims

1. A valve for protecting ventilation openings of closed environments in general against explosion-generated waves, characterized in that it includes at least one pair of resiliently deformable thin plates (10) being retained, at the ends thereof, on two opposite sides (12) of a substantially box-like body (14), open at the bases lying parallel to thin plates 10) between each thin plate (10) and the adjacent one there being fitted a pair of divider baffles (26) integrally fastened to each other, both of them being provided, on a substantially straight side thereof, in a substantially intermediate area, with a bent over portion (20) overlying thin plate (10), and against which the latter engages in a non operating position, while edge (28) opposite to the former side, has a curved contour, edges (28) of each pair of divider baffles (26) being symmetrically arranged relative to each other.

2. The valve of Claim 1, characterized in that the ends of thin plates (10) are received within seats (22) of a support body (24), fastened to side (12) of box-like body (14), said seats being suitably shaped whereby the surface of said seats which is engaged by said thin plates (10) when the latter are deformed,blends without any discontinuity with curved contour (28) of divider baffles (26).

3. The valve of Claim 1, characterized in that thin plates (10) are adapted to deform in a direction opposite to each other, from a thin plate (10) to the adj cent one.

4. The valve of Claim 1, characterized in that, when thin plates (10) are deformed by an explosion-generated overpressure or a vacuum, they come into engagement with the curved shaped contour (28) of the opposite divider baffles (26) they are associated with.

5. The valve of Claim 1, characterized in that the ends of thin plates (10) engage within milled areas (34) on sides (12) of box-like body (14), said ends having a section (36) fastened thereto, for retaining the ends of thin plates (10) within milled areas (34).

6. The valve of Claim 5, characterized in that milled areas (34) have a cross sectional shape adapted to blend without any discontinuity with curved contour (28) of divider baffles (26).

EP 0 336 909 A2

*Fig.1*

*Fig.2*

*Fig.3*

*Fig.4*

*Fig.5*